# FASCICULE DE BREVET EUROPEEN

(11) **EP 0 520 893 B1**
(45) Date de publication et mention de la délivrance du brevet: **28.08.1996**
(21) Numéro de dépôt: 92401794.0
(22) Date de dépôt: 25.06.1992
(51) Int. Cl.: B23K 9/095, B23K 9/127

(54) **Procédé et système de soudage assistés par ordinateur, basés sur la vision de la scène de soudage**
Auf die schweissgebietvision gegründetes Verfahren und System zum rechnergestützten Schweissen
Method and system for computer-assisted welding, based on the welding area vision

(30) Priorité: 28.06.1991 FR 9108105
(43) Date de publication de la demande: 30.12.1992
(73) Titulaire: COMMISSARIAT A L'ENERGIE ATOMIQUE, 75015 Paris (FR)
(72) Inventeur: Dillet, Alain, F-92800 Puteaux (FR); De Prunele, Diane, F-75016 Paris (FR)
(74) Mandataire: Dubois-Chabert, Guy

(56) Documents cités:
- DE-A- 3 545 158
- US-A- 4 567 348
- SOUDAGE ET TECHNIQUES CONNEXES Juin 1989, pages 25 - 29 J.L.BREAT 'cellule robotisée de soudage avec adaptativité en temps réel des paramètres de soudage.
- PATENT ABSTRACTS OF JAPAN vol. 7, no. 261 (M-257)(1406) 19 Novembre 1983 & JP-A-58 141 864

## Description

La présente invention concerne un procédé de soudage automatique et son système de soudage assistes par ordinateur. Ce système de soudage assisté par ordinateur, ou système SAO, permet de maîtriser le procédé de soudage en temps réel.

L'invention trouve ses applications dans de nombreux domaines et, plus particuliérement, dans les industries dites de "haute technologie", telles que le nucléaire, l'aéronautique, le spatial et l'agro-alimentaire.

Aujourd'hui, la plupart des opérations de soudage nécessitent la proximité continuelle d'un opérateur humain pour faire face à des conditions imprévues. En effet, en fonctionnement de production, les conditions de soudage sont rarement totalement constantes ; elles présentent en général des perturbations aléatoires et imprévisibles, telles que des déformations, des inhomogénéités, des écarts de position, etc. Ces perturbations ont souvent de fâcheuses conséquences sur la qualité du soudage.

Il existe cependant des dispositifs de soudage automatique tenant compte de certaines de ces perturbations. Ces dispositifs sont répertoriés dans un ouvrage intitule "Robots de soudage, capteurs et adaptativité de trajectoire", publié en 1988, par les Editions HERMES, sous la plume de J. M. DETRICHE.

La plupart de ces dispositifs existent sous la forme de capteurs greffes sur des installations préexistantes. Ainsi, la plupart de ces dispositifs n'assurent le contrôle que d'une seule fonction du procédé de soudage, cette fonction étant très souvent le suivi du joint de soudage.

L'article de J. L. BREAT intitulé "Cellule robotisée de soudage avec adaptativité en temps réel des paramètres de soudage" dans soudage et techniques connexes, Juin 1989, pages 25-29, décrit un système de SAO à apprentissage basé sur la vision du profil du joint avant soudage. Dans ce système, un capteur d'images est positionné sur la torche de soudage et assure la prise d'images perpendiculairement à la zone de soudage.

Ce système présente donc l'inconvénient que l'analyse des images ainsi réalisées porte sur la ligne d'intersection du plan laser projeté sur le joint, en avant de la torche ; il ne permet donc pas le contrôle de paramètres résultants tels que la pénétration.

Le document DE-A-3 545 158 décrit un procédé de SAO adaptatif, basé sur des mesures de température en différents points de la scène de soudage. Ce procédé a l'inconvénient d'être uniquement basé sur des mesures de température ; il ne permet donc aucune vision de la scène de soudage.

Le document US-A-4 567 348 décrit un système de soudage destiné à relever la position du joint sur la scène de soudage à partir d'une image du joint réalisée avant le passage de la torche de soudage. Ce procédé ne permet donc pas le contrôle de certains paramètres tels que la largeur du bain de soudure et son relief.

La présente invention permet justement de maîtriser une grande partie des fonctions du procédé de soudage, et ce, en temps réel.

Le procédé de soudage selon l'invention assure un autocontrôle du système SAO, qui permet, par conséquent, d'effectuer des soudures dans des conditions non maîtrisables par un opérateur humain (vitesse, justesse, rentabilité) en milieu hostile.

Le système SAO selon l'invention comprend notamment une tête de soudage qui comporte un dispositif pour mettre en images la scène de soudage en cours. Les images, ainsi obtenues, sont traitées en temps réel par des moyens de commande et de traitement (par exemple, un ordinateur) de façon à en déduire les valeurs des corrections éventuelles à apporter au système pour obtenir un soudage régulier et de qualité. Ce système met en oeuvre un procédé de soudage automatique basé sur un apprentissage des cas de soudage déjà traités.

De façon plus précise, le procédé de soudage SAO consiste en une première étape d'établissement préalable d'une connaissance méthodique et quantitative des lois de comportement du matériau lors d'une opération de soudage. Cette connaissance se traduit par des relations entre les divers paramètres de soudage.

Selon l'invention, les relations comprennent des relations reliant un paramètre mesuré avec un paramètre de résultat, ainsi que des relations reliant un paramètre de résultat avec un paramètre commandable.

Ces trois paramètres interagissant, chaque paramètre de résultat étant asservi à une valeur constante propre, par correction du paramètre commandable à partir de la détermination du paramètre mesuré.

De façon avantageuse, l'établissement de ces relations consiste à établir au moins une base de données à partir de triplets de paramètres comportant chacun un paramètre mesuré, un paramètre commandable et un paramètre de résultat.

Selon un mode de réalisation, trois bases de données sont établies :
- une base de données statique comportant, pour chacun des paramètres mesurés, des valeurs obtenues pour les paramètres commandables et les paramètres de résultat en régime établi ;
- une base de données dynamique comportant des valeurs de paramètres mesurés et des paramètres de résultat lors de variations temporelles des paramètres commandables ;
- une base de données perturbée comportant des valeurs des paramètres de résultat obtenues pour les paramètres mesurés et les paramètres commandables en présence d'une perturbation à traiter.

Les relations établies peuvent comporter, entre autres, et pour différentes conditions de soudage, des relations entre le courant de soudage et la longueur du bain de fusion en cours d'opération et les paramètres géométriques du cordon de soudure résultant.

De la même manière, elles peuvent également comporter des relations entre le courant de soudage et le relief du bain fondu en cours d'opération et les paramètres géométriques du cordon résultant.

Les relations nécessaires au fonctionnement asservi du système SAO sont alors implantées dans ledit système, soit sous forme logicielle, soit sous forme matérielle.

Lors de la réalisation physique d'une soudure en mode SAO, le procédé SAO consiste à exécuter une seconde étape comportant les opérations suivantes :
a) prise de vues d'une scène de soudage en cours ;
b) analyse de cette prise de vues pour mesurer les paramètres nécessaires ;
c) calcul, à partir de ces mesures et desdites relations réimplantées dans le système, des valeurs de correction à apporter aux paramètres de soudage durant l'exécution du soudage ;
d) intervention sur les paramètres de soudage.

Avantageusement, il comprend entre les opérations (a) et (b), une opération de dialogue avec un utilisateur assurant un choix d'exécution automatique ou d'exécution interactive des opérations (b) à (d).

Pour un contrôle continu du soudage, les opérations (a) à (d) sont répétées en permanence tant qu'un ordre d'interruption n'a pas été reçu. Cet ordre d'interruption est donné par l'utilisateur pendant l'opération de dialogue interactif.

De plus, l'opération (a) de prises de vues est éventuellement suivie d'une opération de mémorisation desdites prises de vues, sur un magnétoscope par exemple.

En fonctionnement habituel, l'opération (a) de prises de vues consiste à effectuer lesdites prises de vues dans un mode continu. Toutefois, dans le cas du choix de l'exécution interactive, l'utilisateur peut également donner l'ordre d'effectuer lesdites prises de vues dans un mode vue par vue, pour des besoins de paramètrage par exemple.

Ce procédé peut être mis en oeuvre, par exemple, dans des opérations de traitement métallique faisant intervenir un bain de soudage.

Un tel procédé peut être appliqué dans un système de SAO. Le système mettant en oeuvre ce procédé comprend :
- une tête de soudage ;
- un porteur (ou, plus précisément, un banc de soudage) auquel la tête de soudage est fixée ;
- des moyens d'alimentation en tension de la tête ;
- une unité de commande et de traitement (UCT) reliée à la tête de soudage et au banc.

Ce système se caractérise par le fait que :
- la tête de soudage comprend des moyens de prises de vues de la scène de soudage ;
- le banc de soudage est apte à se mouvoir par rapport à la scène de soudage ; et
- l'unité de commande et de traitement (UCT) comprend une unité centrale (UC), des moyens pour analyser les prises de vues et des moyens pour commander les moyens d'alimentation et le banc de soudage.

Avantageusement, l'unité de commande et de traitement comprend en outre des moyens de visualisation des images et des moyens de mémorisation desdites images, situés en amont des moyens d'analyse.

Les moyens pour analyser les images de la scène de soudage peuvent comporter une carte d'acquisition d'images implantée dans l'UC, cette carte étant reliée aux moyens de visualisation des images et aux moyens de mémorisation des images.

Selon l'invention, l'unité centrale comporte des cartes d'interface d'entrées/sorties aptes à établir des liaisons entre l'UC et le banc de soudage, entre l'UC et les moyens d'alimentation et entre l'UC et la tête de soudage.

De façon plus particulière, les moyens d'alimentation en tension comprennent un générateur de soudage comportant deux entrées, la première recevant une valeur de courant nominal et la seconde recevant une valeur de courant de correction à apporter audit courant nominal. Ces valeurs de courant nominal et de correction sont commandables à partir de l'UC.

De plus, le système peut comprendre des moyens de régulation d'une tension d'arc reliés, en entrée, à la tête de soudage, et, en sortie, au banc de soudage.

D'autres caractéristiques et avantages de l'invention ressortiront mieux de la description qui va suivre, donnée à titre illustratif, mais non limitatif, en référence aux dessins dans lesquels :
- la figure 1 représente le schéma fonctionnel de la méthodologie mise en place dans le procédé de soudage automatique selon l'invention ;
- la figure 2 représente, de façon très schématique, les moyens constituant le système de SAO ;
- la figure 3 représente schématiquement l'unité de commande et de traitement ; et
- la figure 4 représente, de façon fonctionnelle, le procédé mis en oeuvre par l'unité de commande et de traitement.

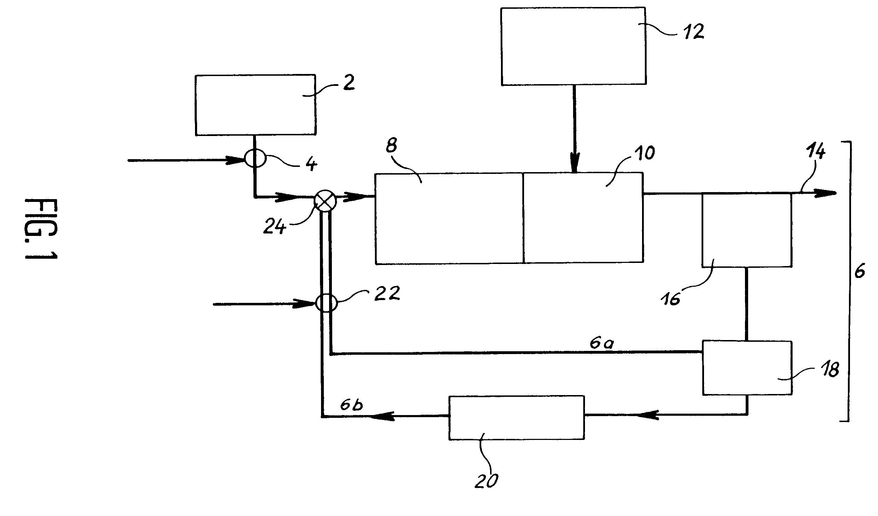

Sur la figure 1, on a représenté le schéma fonctionnel de la méthodologie appliquée dans le système selon l'invention. Elle montre une boucle de rétro-action permettant d'asservir le système, c'est-à-dire de corriger, en cours d'exécution, certains paramètres du soudage. On parlera aussi d'interactivité en temps réel.

Cette boucle de rétro-action est établie à partir d'informations relevées au niveau de la scène de soudage ; ces informations sont traitées pour être utilisées de façon à corriger certains paramètres du soudage. Le nombre de paramètres étant très important, la boucle de rétro-action (ou contre-réaction) doit être multivariable.

La mise en oeuvre d'une telle contre-réaction nécessite de connaître les lois de comportement régissant le soudage. Comme explique précédemment, ces lois sont déterminées préalablement aux opérations de soudage. Elles sont déterminées à l'aide du système de SAO en mesure seule, mises sous forme de bases de données et implantées dans ledit système.

Comme montre sur la figure 1, des paramètres programmés en 2 sont introduits dans la boucle de procédé 6 après avoir été initialisés à des valeurs de consigne 4.

Ces valeurs de paramètres sont appliquées en 8 aux moyens matériels auxquels ils sont destinés dans le système de SAO. Une interaction se produit aussitôt en 10 entre l'arc électrique crée par la tête de soudage et la matière, c'est-à-dire les pièces à souder. Il s'agit du procédé physique du soudage.

Si les conditions de soudage ne sont pas parfaites, c'est-à-dire conformes aux conditions prédéfinies (ce qui est généralement le cas), des perturbations extérieures 12 interviennent, agissant sur le procédé physique 10 du soudage.

La scène de soudage est filmée en 16 en temps réel et les images obtenues sont traitées en 18. Le traitement des images permet de déterminer des informations concernant le soudage en cours.

Certaines de ces informations concernent, de façon plus spécifique, la trajectoire de soudage, c'est-à-dire le suivi du joint. Ces informations sont transformées en valeurs de correction 22 et sont envoyées à l'entrée 24 de la boucle 6 de contre-réaction, où elles sont corrélées avec les valeurs de consigne 4 des paramètres 2 : on forme ainsi une boucle 6a de trajectoire.

Les autres informations déterminées en 18 permettent, par référence aux lois de corrélation et aux lois de commande 20 du procédé, préalablement déterminées et enregistrées dans la base de données, de déduire les corrections 22 qui sont corrélées en 24 aux valeurs de consigne 4 des paramètres 2 : on forme ainsi une boucle 6b de procédé.

Dans le cas particulier où les lois sont bi-univoques et les paramètres indépendants, chaque paramètre de soudage peut être asservi par une boucle de rétro-action qui lui est propre.

Les paramètres de soudage régissant un procédé de soudage à l'arc, tel que le TIG (soudage sous gaz inerte avec électrode de tungstène), sont nombreux, c'est-à-dire de l'ordre d'une bonne douzaine : tension d'arc, courant de soudage, vitesse de la torche de soudage, vitesse du fil d'apport, type du matériau, état de la surface des pièces à souder, etc.

La présente invention met en oeuvre une méthodologie pour déterminer des lois de corrélation entre tous ces paramètres de soudage ou, par mesure de simplification du système, entre les paramètres significatifs du soudage.

Selon la méthodologie citée ci-dessus, on répertorie les paramètres significatifs en trois classes :
- les paramètres de résultats qui sont significatifs du résultat obtenu après le soudage ;
- les paramètres commandables qui permettent, en les modifiant, d'agir sur les paramètres de résultats ; et
- les paramètres mesurés, ou paramètres observables, qui sont accessibles à une mesure pendant le soudage.

Les mesures de certains paramètres mesurés permettent de déterminer les caractéristiques (qualité, etc. ) de certains paramètres de résultats. On peut donc déterminer des lois de corrélation entre un paramètre mesure et un paramètre de résultat.

De plus, les paramètres de résultats sont contrôlés par modification des paramètres commandables. On peut donc déterminer des lois de corrélation entre un paramètre commandable et un paramètre de résultat.

Ainsi, chaque loi de corrélation assure un lien étroit entre un paramètre d'une catégorie (mesure, commandable, de résultat) et un paramètre d'une autre catégorie.

De façon plus précise, on asservit le système en maintenant les paramètres de résultat dans un intervalle de tolérance prédéfini. Ces paramètres sont rendus quasiment constants en corrigeant les paramètres commandables à partir de la mesure des paramètres mesures. Ces trois types de paramètres forment un triplet de paramètres.

On peut illustrer, par un exemple, ce qui vient d'être décrit. En effet, on peut asservir en pénétration le système de SAO vis-à-vis de perburbations thermiques, en se basant sur le triplet suivant : largeur-envers de la soudure comme paramètre de résultat, courant de soudage comme paramètre commandable, et bombé-endroit de la soudure (relief endroit du bain fondu) comme paramètre mesuré.

Cet asservissement, comme tous les asservissements traites dans le système, est réalisable lorsque la condition suivante est réalisée : les lois de corrélation entre deux types de paramètres sont bi-univoques, c'est-à-dire monotones et de pentes non nulles.

De façon plus pratique, la mesure de trois informations, correctement choisies, peut permettre, dans chaque cas particulier de soudage, l'obtention de lois de corrélation puis la mise en oeuvre de l'asservissement utilisant ces lois de corrélation.

Ces lois de corrélation sont mémorisées pour constituer une base de données. Pour établir cette base de données, il faut choisir le triplet optimum à partir d'essais, en nombre réduit, mais respectant strictement la méthodologie du système. De cette façon, plus la base de donnée sera riche en nombre d'applications, plus le procédé "tournera" rapidement.

Cette base de données est en fait composée de trois bases de données :
- une base de données statique, qui est établie à partir du comportement du procédé en régime établi, pour différentes valeurs stables du paramètre commandable, en l'absence de perturbations et avec les autres paramètres constants aux valeurs nominales ;
- une base de données dynamique, qui est établie à partir du comportement du procédé lors d'une transition de valeurs du paramètre commandable (échelon entre deux régimes stables), en l'absence de perturbations et avec les autres paramètres constants aux valeurs nominales ; et
- une base de données perturbée, qui est établie à partir du comportement du procédé en présence de la perturbation que l'on veut traiter, les autres paramètres étant constants.

Ces trois bases de données permettent de gérer des triplets de paramètres constitués de paramètres mesurés, de paramètres commandables et de paramètres de résultat. La base de données statique contient donc les valeurs des paramètres mesurés corrélées aux valeurs des paramètres commandables et des paramètres de résultat, en régime établi, à différents points de fonctionnement du procédé, dans un domaine entourant le point de fonctionnement nominal. La base de données dynamique donne les valeurs en régime transitoire des paramètres mesurés et des paramètres de résultat lors de variations temporelles des paramètres commandables entre différents points de la base de données statique. La base de données perburbée comporte les valeurs des paramètres de résultat corrélées aux valeurs des paramètres commandables et des paramètres mesures, en présence de la perturbation à traiter et pour différents points de fonctionnement.

L'asservissement de ces paramètres de résultat est réalisé en modifiant les valeurs des paramètres commandables en accord avec les valeurs établies des paramètres mesurés.

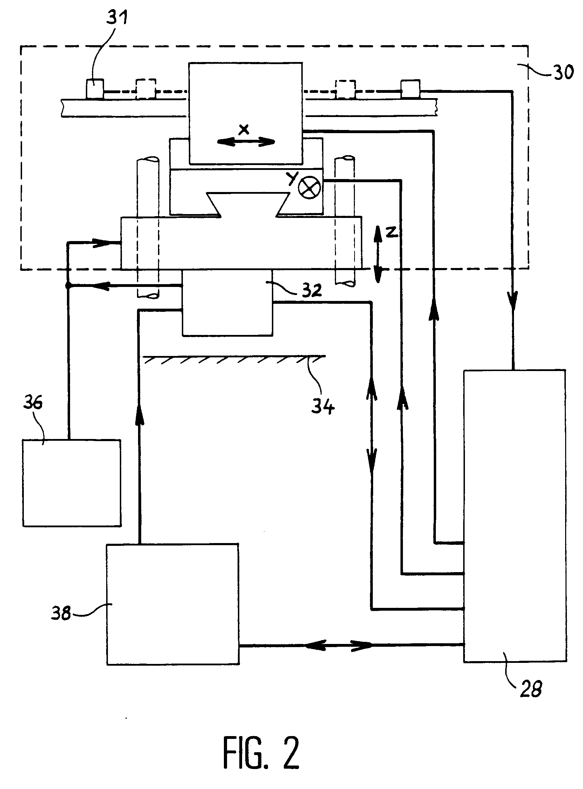

Les mesures et traitements pour asservir le système et pour établir les bases de données, sont effectués à partir de l'installation montrée de façon très schématique sur la figure 2.

Sur cette figure, on a représente le banc de soudage 30 sous lequel est fixée la tête de soudage 32. Cette tête de soudage 32 est déplacée par rapport au plan de soudage 34, en fonction des mouvements du banc de soudage 30. La tête de soudage 32 peut ainsi être déplacée selon les axes X longitudinal, Y transversal et Z vertical.

En effet, le banc de soudage, du type cartésien à plat, est commandé en vitesse sur son axe transversal Y, de façon analogique à travers un variateur, non représenté, pouvant être commandé manuellement ou à partir de l'UCT 28. L'axe vertical Z est relié à un dispositif de régulation 36 de la tension d'arc, pour commander la hauteur de la tête de soudage 32 par rapport au plan de soudage 34, le dispositif recevant, en entrée, la valeur de tension d'arc mesurée sur la tête de soudage 32.

Les mouvements sur l'axe longitudinal X sont télécommandables, en mode "tout ou rien", à partir de l'UCT 28. De plus, des contacts électriques 31, ou butées, ont été disposés sur ledit axe longitudinal X, pour fournir à l'UCT 28 des informations ponctuelles de position du banc 30 sur cet axe.

La tête de soudage 32 est reliée également à l'UCT 28 avec laquelle elle échange un certain nombre d'informations sous forme notamment d'images.

En effet, ladite tête 32 comprend une caméra vidéo assurant la prise des images de la scène de soudage. Elle comprend, de plus, des moyens pour projeter des spots lumineux sur ladite scène de soudage. La position de ces spots, ainsi que l'éclairage de la scène de soudage par l'électrode portée à haute température et par l'arc, permettent de déterminer (via les prises de vues) certains paramètres observables.

Un générateur 38 de soudage envoie sur une seconde entrée de la tête de soudage 32, un courant de soudage dont la valeur est déterminée à partir de l'UCT 28. Un échange d'informations concernant des valeurs de courant peut donc s'établir entre le générateur 38 et l'UCT 28.

Le générateur 38 comporte deux entrées non représentées. Une première entrée, entrée de consigne, assure la commande du courant nominal du générateur 38 (entre 0 et 200 Ampères). Une seconde entrée, entrée de correction, sommée avec l'entrée de consigne dans le générateur 38, reçoit la correction à apporter au courant (entre -50 et + 50 Ampères). Le générateur 38 est, de plus, commandable en mode tout-ou-rien à partir de l'UCT 28.

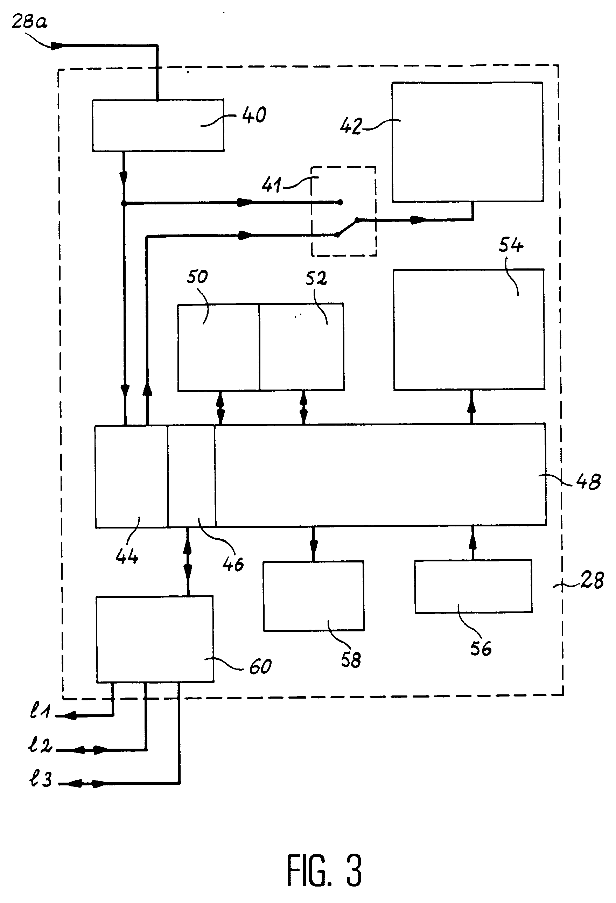

Sur la figure 3, on a représenté l'unité de commande et de traitement (UCT) 28. A son entrée 28a, l'UCT 28 reçoit un signal en provenance de la tête de soudage. Ce signal est un signal vidéo provenant de la camera de la tête de soudage.

En effet, un dispositif de prise de vues (camera, filtre, objectif) est inclus dans la tête de soudage pour permettre, d'une part une visualisation à distance de la scène de soudage qui se déroule, et d'autre part, une détermination à partir des images obtenues, des paramètres de soudage observables.

Ainsi, le signal vidéo en provenance de la caméra, est traité dans l'UCT 28.

L'UCT 28 comprend un magnétoscope 40 (ou tout autre moyen de mémorisation d'images), à l'entrée duquel arrive le signal vidéo. Les images sont ainsi mémorisées pour permettre, éventuellement, une simulation du procédé dans les cas où il n'est pas applique en temps réel lors des phases de paramétrage des algorithmes de mesures.

Il comprend, de plus, un moniteur vidéo 42, une carte d'acquisition d'images 44, des cartes d'interface 46 d'entrées/sorties (E/S), toutes ces cartes étant implantées dans une unité centrale 48 d'un micro-ordinateur. Cette unité centrale 48 (UC) commande toutes sortes de périphériques usuels d'un ordinateur, à savoir une unité de disquettes 50, une unité de disques durs 52, un écran 54, un clavier 56 et une imprimante 58.

Ainsi, le signal vidéo, mémorisé par le magnétoscope, est envoyé, de façon continue, sur la carte 44 d'acquisition d'images, ce qui permet de traiter en permanence lesdites images.

Le moniteur 42 permet à l'utilisateur de visualiser le contenu de la carte image 44, donc en particulier, l'image numérisée sur laquelle s'effectuent les traitements, ainsi que les valeurs des paramètres déterminés par des traitements effectués par l'UC sur l'image contenue dans ladite carte 44.

Selon un mode de réalisation de l'invention, le moniteur 42 est un moniteur analogique couleurs. Un mode "noir et blanc" permet l'affichage de l'image principale en noir et blanc et l'affichage des autres informations dans des coloris différents selon le type d'information. Un mode "pseudo-couleurs" permet de transposer l'échelle des gris, de façon arbitraire, en une échelle de couleurs qui permet une meilleure observation de l'image par l'utilisateur.

De plus, un commutateur 41 permet, à la demande de l'utilisateur, d'afficher sur le moniteur 42 soit le signal provenant directement du magnétoscope 40, à des fins de contrôle et de mise au point, soit les informations provenant de la carte 44.

Selon un mode de réalisation de l'invention, la carte 44 d'acquisition d'images est une carte "frame grabber" qui est implantée dans l'unité centrale 48 d'un micro-ordinateur industriel au standard AT.

La carte frame grabber assure la transformation d'une image sous forme de signal vidéo (analogique) en une image digitalisée qu'elle stocke dans une mémoire accessible par le micro-ordinateur, pour traitement.

L'unité centrale 48 est choisie relativement puissante et rapide (386 à 20 Mégahertz). Elle peut ainsi effectuer tous les traitements en temps réel.

Dans cette unité centrale 48, sont également implantées des cartes d'interface 46 qui assurent les liaisons entre l'unité centrale 48 et les autres éléments du système, à savoir des liaisons l1, l2, l3, avec, respectivement, la tête de soudage 32, le banc de soudage 30 et le générateur de soudage 38. Ces cartes comprennent des cartes de sorties analogiques, d'entrées analogiques et d'entrées/sorties digitales.

Toutes les liaisons l1, l2, l3 sortant des cartes d'interface sont soumises à un environnement perturbe dû notamment à des courants forts, et à l'arc électrique. Pour soustraire ces liaisons l1, l2, l3 à cet environnement perturbé, lesdites liaisons passent dans des isolements galvaniques 60 constitués, par exemple, d'opto-coupleurs ou d'amplificateurs d'isolement.

Le fonctionnement d'ensemble est piloté par un logiciel spécifique tournant sur l'UC. Une interface (logicielle) utilisateur permet audit utilisateur de maîtriser l'ensemble du système (c'est-à-dire le paramétrage, le fonctionnement, l'exécution et les fonctions annexes du système) tout en lui fournissant les informations nécessaires.

Le dialogue interactif avec l'utilisateur se fait au moyen des commandes du clavier 56 et de l'affichage sur l'écran 54. Sur cet écran 54, s'affichent des menus dans lesquels l'utilisateur choisit une option donnant accès à un nouveau menu ou une fenêtre. Cette fenêtre permet l'accès à un certain nombre de paramètres du programme actif enregistré dans l'UC 48 et décrit dans la suite de la description. Ces paramètres peuvent alors être modifies, avec une prise d'effet immédiate.

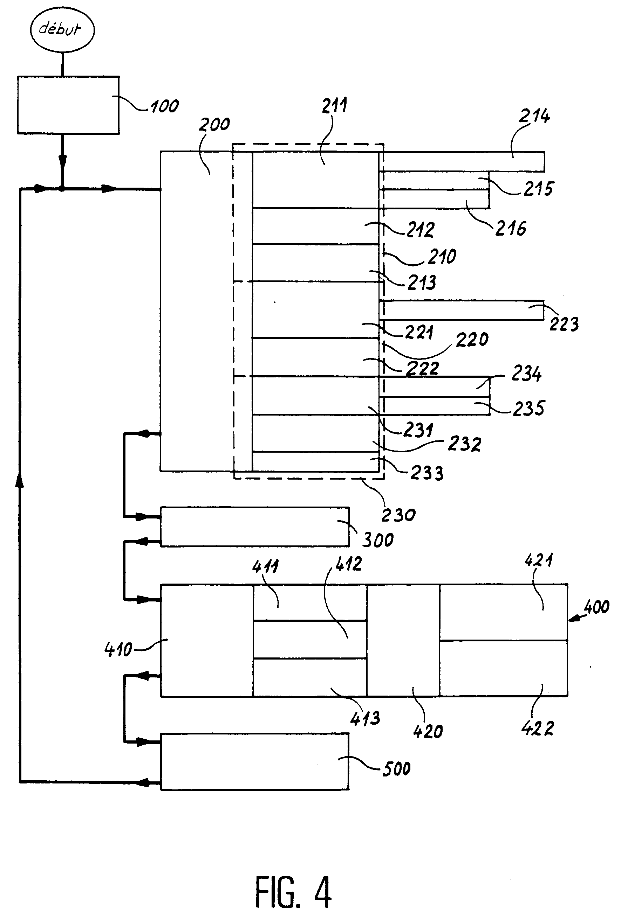

Les possibilités de choix, offertes à l'utilisateur grâce à cette interface, sont montrées de façon plus détaillée dans le bloc 200 de la figure 4. Cette figure représente, de façon fonctionnelle, le procédé applique dans le système de SAO et mis en oeuvre par un logiciel.

Ce logiciel peut travailler avec plusieurs blocs de commande (ou programmes) en mémoire, mais, à un instant donné, il ne travaille que sur un seul.

D'une façon générale, le logiciel assure l'ensemble du fonctionnement du système de SAO, les mesures par traitement d'images, les asservissements en temps réel, les fonctions de contrôle et de commande du système, et l'interface de dialogue avec l'utilisateur.

En début de procédé, il y a une étape d'initialisation générale au niveau du bloc 100. Cette initialisation consiste en l'initialisation du logiciel et des paramètres du procédé à des valeurs de consigne, c'est-à-dire à des valeurs nominales étudiées pour des conditions de soudage nominales.

L'étape suivante consiste à effectuer une boucle tournant en permanence sur plusieurs tâches définies dans les blocs 200, 300, 400 et 500 et qui, lors de l'exécution d'un soudage, est synchronisée sur une horloge temps réel pour fonctionner à une vitesse constante.

Le bloc 200, c'est-à-dire la première tâche effectuée par le logiciel, est constitué par l'interface utilisateur avec l'affichage d'un menu général. Ce menu donne accès à trois groupes d'options :
- un groupe 210 de travail sur les programmes, avec un menu 211 d'Edition donnant accès aux modifications 214 des paramètres, à leur recopie 215 dans les différents programmes, et à leurs sorties 216 sur l'imprimante 58 ; un menu 212 de sauvegarde donnant accès aux opérations de sauvegarde des programmes sur disques ou disquettes ; et un menu 213 de chargement donnant accès aux opérations de chargement dans l'UC des programmes mémorisés sur disque dur ou disquette ;
- un groupe 220 d'exécution en temps réel, avec un menu 221 d'exécution interactive donnant la possibilité à l'utilisateur de modifier en 223 tous les paramètres de programme au cours de l'exécution, avec effet immédiat ; et un menu 222 d'exécution automatique ne permettant pas de modification, au cours de l'exécution, par l'utilisateur ;
- un groupe 230 de servitudes du système avec un menu 231 d'utilitaires permettant le formatage 234 des disquettes et les commandes 235 du système informatique (par exemple les commandes DOS) ; un menu 232 d'utilisation de l'interprêteur permettant un travail interactif direct sur la carte images, et ; une sortie directe 233 du logiciel.

La seconde tâche du logiciel, le bloc 300, consiste en la lecture des états en provenance du banc et du générateur de soudage, ces états étant tenus à jour à chaque tour de la boucle.

La troisième tâche du logiciel, le bloc 400, consiste à exécuter en 410, celles des fonctions 411, 412, 413 de traitement d'images qui sont actives, à élaborer en 420 des mesures, et à commander éventuellement le banc et/ou le générateur de soudage en 421 et 422. Cette tâche est exécutée en temps réel à partir des images traitées.

Les fonctions de traitement d'images, citées précédemment, sont au nombre de trois, et sont relatives à trois informations mesurées, à savoir le suivi du joint, la largeur du bain et la hauteur de la tête de soudage.

Les trois fonctions JOINT 411, BAIN 412 et HAUTEUR 413 sont effectuées selon des caractéristiques communes :
- le traitement d'images est effectué seulement sur le contenu d'une fenêtre d'intérêt dans l'image en cours de traitement. Cette fenêtre est de forme géométrique simple (rectangle), d'orientation fixe, de dimensions et de position entièrement programmables ;
- on travaille sur les niveaux de gris des pixels de la fenêtre. Leur répartition 2D (deux dimensions) est transformée en un profil 1D suivant un des axes de la fenêtre : un point du profil a pour valeur la moyenne de la fenêtre suivant l'autre axe (lissage dans une dimension de la fenêtre) ;
- un algorithme spécifique de recherche d'une caractéristique du profil calcule la position de la caractéristique recherchée dans la fenêtre : c'est la valeur de la mesure correspondante ;
- aux différents stades du traitement, des critères de validité sont pris en compte. Les cas d'erreur sont signales, et en cas d'erreurs sur un nombre programmable de tours successifs du logiciel, une alarme est déclenchée ;
- à l'intérieur de chaque fenêtre de traitement, sont définis des repères complémentaires, dont la position est programmable. Ces repères portent sur l'axe de la fenêtre suivant lequel est établi le profil de gris.

La fonction JOINT a pour objet de mesurer la position du joint. Cette position est déterminable par observation de la scène de soudage illuminée par l'arc, ou éventuellement par un spot, suivant l'angle de prise de vues. Elle travaille dans une fenêtre parallèle aux axes de l'image, avec détermination du profil transversal à l'axe de soudage. Le joint se présente normalement comme une ligne plus sombre, dans l'axe de soudage (horizontal sur le moniteur), sur fond plus clair. L'algorithme de JOINT recherche un minimum dans le profil, avec des critères programmables de contraste du minimum par rapport au fond et à d'autres minima éventuels, et de largeur du minimum. La position du centre du minimum valide est le résultat de mesure.

La fonction BAIN a pour objet de mesurer la largeur ou le diamètre du bain à partir de l'observation faite de la scène de soudage. Elle utilise une fenêtre, de type programmable suivant l'aspect de l'image à traiter :
- soit une fenêtre "droite" parallèle aux axes de l'image, avec détermination du profil transversal à l'axe de soudage ;
- soit une fenêtre "oblique", constituée en fait de deux demi-fenêtres de dimensions égales, avec un sommet ("pivot" central) commun, et orientées à environ + et -60° par rapport à l'axe de soudage. Cette fenêtre oblique forme en fait un V orienté vers l'avant du bain et, bien positionnée, elle permet de travailler suivant deux rayons du bain. Le profil est déterminé suivant les deux branches du V, en continuité, et peut être assimilé à une coupe pseudo-diamétrale du bain.

Suivant l'aspect de l'image du bain, on dispose pour le traitement d'un choix, programmable, de trois algorithmes (dans le mode de réalisation décrit), tous trois relevant d'une analyse de contraste par dérivation du profil de gris de la fenêtre.

L'algorithme le plus simple, dit de "tache", est utilisable sur des images où le bain forme, sur fond sombre, une tache brillante, bien homogène dans la fenêtre, et avec un bon contraste sur ses bords.

L'algorithme, dit de "tache 1", s'applique au même genre d'images que le précédent, mais permet de traiter le cas où la tache n'est pas homogène dans la fenêtre (surcroît ou diminution de brillance au centre de la tache, en général dus à la présence de la pointe d'électrode).

Ces deux algorithmes sont généralement utilises sur des bains creux, c'est-à-dire pour un soudage sans apport de fil.

L'algorithme, dit de "vague", est utilisé sur des images où le bain se présente sous forme d'une tache centrale inhomogène et claire, entourée d'un liseré fonce (voire noir), lui-même entouré d'un reflet brillant et relativement étroit, le tout sur fond sombre.

Cet algorithme est, quant à lui, utilisé essentiellement sur des bains "bombés", c'est-à-dire pour un soudage avec apport de fil.

La fonction HAUTEUR a pour objet de mesurer la hauteur de la tète de soudage au-dessus des points d'impact des spots, par une méthode de triangulation. Compte tenu de la disposition géométrique de la tête, une variation de hauteur se traduit sur l'image par un déplacement du spot parallèlement à l'axe de soudage.

La fonction HAUTEUR utilise une fenêtre par spot de hauteur, soit trois fenêtres, parallèles aux axes de l'image. Le traitement est le même pour les trois fenêtres et il est effectue successivement sur la première, les deux premières ou les trois fenêtres, suivant la valeur d'un paramètre programmable de chaque programme.

Le profil est déterminé parallèlement à l'axe de soudage et un algorithme de traitement déterminé la position du centre du spot, ou éventuellement, pour un recalage par exemple, la position d'une transition de fonce à clair ou de clair à foncé.

Selon un autre mode de réalisation de l'invention, on utilise pour mesurer la hauteur, un séparateur de faisceau associé à la caméra de prise de vues. Ce séparateur de faisceau permet, à partir de l'observation des spots projetés, de former l'image de la scène de soudage dans une chambre de mesure, dans laquelle sont implantes un ou deux détecteurs linéaires de position des spots (composant standard PSD, Position Sensing Device).

A partir de ces fonctions, des mesures sont élaborées dans le bloc 420.

A partir de ces mesures, et en fonction des valeurs de consigne, l'exécution de fonctions 421 et 422 d'asservissement d'éléments extérieurs est mise en oeuvre. L'exécution de ces fonctions se traduit par des commandes de mouvements du banc de soudage et des commandes de paramètres de procédé, et plus précisément, de commandes du courant de soudage fourni par le générateur.

En effet, les commandes de mouvement sont caractérisées par une commande en vitesse, proportionnelle à l'écart entre la mesure et la consigne. Ce type de commande est associé :
- à la fonction JOINT, pour assurer la fonction de suivi de joint. La consigne de la fenêtre de mesure est alors calée à l'endroit où l'on souhaite maintenir le joint. L'écart dans la fenêtre de joint est multiplié par un gain programmable et envoyé par une des sorties des moyens de mouvement transversal du banc. En cas d'erreur dans la mesure, ou de mesure trouvée hors limites, on envoie aussitôt une commande de vitesse nulle, qui laisse le mouvement en l'état ;
- à la fonction HAUTEUR, dans le seul cas où l'on souhaite faire une régulation de hauteur indépendamment de la commande par tension d'arc. Ceci peut être le cas, en l'absence d'arc, pour une phase d'approche ou d'observation par la caméra. Le fonctionnement est alors identique au cas du joint, mais en vertical, et sous réserve évidente d'avoir cale la ou les consignes de la ou des fenêtres utilisées à une position correspondant à la hauteur voulue.

De plus, les commandes de paramètres de procédé sont caractérisées par l'asservissement d'une grandeur équivalant à une position, c'est-à-dire typiquement par une commande PID (commande à triple action : proportionnelle, intégrale, par différenciation) à partir d'un écart par rapport à une consigne.

Dans la réalisation décrite ici, il s'agit essentiellement de commander le courant du générateur pour asservir la pénétration soit à partir de la mesure de largeur de bain, soit à partir de la mesure de hauteur de tête avec régulation de tension d'arc. La commande du courant du générateur est séparée en deux canaux : un canal dit de consigne et un canal dit de correction. La consigne est programmable pour chaque programme, et rafraîchie en sortie à chaque tour du logiciel en mode exécution.

L'asservissement du courant de soudage peut être associé :
- à la fonction BAIN, en cas d'asservissement base sur la largeur de bain. La largeur mesurée est alors comparée avec une consigne de largeur programmable et l'écart est envoyé à un algorithme réalisant la correction PID, complétée éventuellement d'une réduction du bruit sur le terme dérivé par un lissage programmable. Les trois gains P, I et D sont également programmables. La correction calculée est alors envoyée sur l'entrée analogique de correction du générateur et somme avec l'entrée de consigne dans le générateur. En cas d'erreur ponctuelle, on conserve la correction précédemment établie, c'est seulement en cas d'erreurs cumulées, provoquant une alarme, que l'on ramène la correction à zéro, revenant ainsi au courant de consigne de base ;
- à la fonction HAUTEUR, en cas d'asservissement base sur le bombe, avec hauteur commandée par la régulation de tension d'arc. La hauteur mesurée avec un spot, ou moyennée sur la mesure avec deux spots, est comparée avec une consigne de bombe programmable et le traitement est identique au cas de l'asservissement par la largeur de bain.

En plus de l'exécution de ces fonctions de traitement d'images et d'asservissement d'éléments extérieurs, le logiciel gère également des fonctions de séquencement du type contrôle/commande. Ces dernières fonctions comprennent des commandes de marche/arrêt du banc et du générateur de soudage ainsi que le chaînage d'exécution des programmes qui est contrôle par des paramètres programmables (choix du type de fin de programme, choix du programme suivant à exécuter) et par des commandes directes de l'utilisateur (à partir du clavier).

Enfin, la quatrième et dernière tâche du logiciel, le bloc 500, consiste à lancer l'acquisition d'une image par la carte images. Cette tâche n'est exécutée qu'en mode de prises de vues continu. En effet, en mode, vue par vue, l'image traitée est fixe et gardée dans la mémoire de la carte et l'acquisition d'une nouvelle image est demandée par l'utilisateur durant la première tâche.

L'invention a été précédemment décrite dans le cas particulier du soudage TIG. Néanmoins, elle peut être appliquée à de nombreux types de soudage (soudage laser, soudage plasma, etc.) et à d'autres traitements de métaux faisant intervenir un bain de fusion, tels que le rechargement.

## Revendications

1. Procédé de soudage automatique dans lequel on traite des paramètres de soudage variant au cours d'une exécution de soudage, caractérisé en ce qu'il comprend :
- une première étape d'établissement et de mémorisation de relations entre lesdits paramètres consistant à établir au moins une base de données à partir de triplets de paramètres, chaque triplet de paramètres comportant un paramètre mesuré, un paramètre commandable et un paramètre de résultat ; et
- une seconde étape consistant à exécuter les opérations suivantes :
a) prise de vue d'une scène de soudage en cours ;
b) analyse de cette prise de vue pour mesurer les paramètres de soudage intervenant dans les relations ;
c) évaluation, à partir de ces mesures et desdites relations, de valeurs de corrections à apporter aux paramètres de soudage ;
d) intervention, en fonction desdites valeurs de corrections, sur le soudage en cours.

2. Procédé selon la revendication 1, caractérisé en ce qu'il comprend, entre les opérations (a) et (b), une opération de dialogue avec un utilisateur assurant un choix d'exécution automatique ou d'exécution interactive des opérations (b) à (d).

3. Procédé selon l'une quelconque des revendications 1 et 2, caractérisé en ce que les opérations constituant la seconde étape sont répétées en permanence tant qu'un ordre d'interruption n'a pas été reçu.

4. Procédé selon la revendication 3, caractérisé en ce que l'ordre d'interruption est donné par l'utilisateur pendant l'opération de dialogue interactif.

5. Procédé selon l'une quelconque des revendications 1 à 4, caractérisé en ce que l'opération (a) de prise de vues est suivie d'une opération de mémorisation de ladite prise de vues.

6. Procédé selon l'une quelconque des revendications 1 à 5, caractérisé en ce que les relations comprennent des relations reliant un paramètre mesuré avec un paramètre de résultat.

7. Procédé selon l'une quelconque des revendications 1 à 6, caractérisé en ce que les relations comprennent des relations reliant un paramètre de résultat avec un paramètre commandable.

8. Procédé selon les revendications 6 et 7, caractérisé en ce que chaque paramètre de résultat est asservi, à une valeur constante propre, par correction du paramètre commandable à partir de la détermination du paramètre mesuré.

9. Procédé selon l'une quelconque des revendications 1 à 8, caractérisé en ce que la première étape d'établissement des relations consiste à établir trois bases de données :
- une base de données statique comportant, pour chacun des paramètres mesurés, des valeurs obtenues pour les paramètres commandables et les paramètres de résultat en régime établi ;
- une base de données dynamique comportant des valeurs de paramètres mesurés et des paramètres de résultat lors de variations temporelles des paramètres commandables ;
- une base de données perturbée comportant des valeurs des paramètres de résultat obtenues pour les paramètres mesurés et les paramètres commandables en présence d'une perturbation à traiter.

10. Procédé selon l'une quelconque des revendications 1 à 9, caractérisé en ce que les relations entre paramètres comportent une relation décrivant une largeur d'un bain de soudage.

11. Procédé selon l'une quelconque des revendications 1 à 10, caractérisé en ce que les relations entre paramètres comprennent une relation décrivant un relief du bain de soudage.

12. Procédé selon l'une quelconque des revendications 1 à 11, caractérisé en ce qu'il est mis en oeuvre dans des opérations de traitement métallique faisant intervenir un bain de soudage.

13. Système de soudage automatisé mettant en oeuvre le procédé selon l'une quelconque des revendications 1 à 12 comprenant :
- une tête de soudage (32) ;
- un porteur de soudage (30) auquel la tête de soudage est fixée ;
- des moyens d'alimentation (36, 38) électrique de la tête ;
- une unité (28) de commande et de traitement (UCT) reliée à la tête de soudage et au porteur,
caractérisé en ce que :
- la tête de soudage comprend des moyens de prise de vues de la scène de soudage ;
- le porteur de soudage est apte à se mouvoir par rapport à la scène de soudage ; et
- l'unité de commande et de traitement (UCT) comprend une unité centrale (48), des moyens (44) pour analyser les prises de vues et des moyens (46) pour commander les moyens d'alimentation et le porteur de soudage.

14. Système de soudage selon la revendication 13, caractérisé en ce que l'unité de commande et de traitement comprend en outre des moyens (42) de visualisation des images et des moyens (40) de mémorisation desdites images, situés en amont des moyens d'analyse.

15. Système de soudage selon la revendication 14, caractérisé en ce que les moyens pour analyser les images de la scène de soudage comportent une carte (44) d'acquisition d'images implantée dans l'unité centrale (UC), cette carte étant reliée aux moyens de visualisation des images et aux moyens de mémorisation des images.

16. Système selon l'une quelconque des revendications 13 à 15, caractérisé en ce que l'unité centrale comporte des cartes (46) d'interface d'entrées/sorties aptes à établir des liaisons entre l'UC et le porteur de soudage, entre l'UC et les moyens d'alimentation et entre l'UC et la tête de soudage.

17. Système selon l'une quelconque des revendications 13 à 16, caractérisé en ce que les moyens d'alimentation électrique comprennent un générateur de soudage générant un courant de soudage commandable extérieurement par au moins un signal électrique.

18. Système selon la revendication 17, caractérisé en ce qu'il comprend en outre des moyens de régulation d'une tension d'arc reliés, en entrée, à la tête de soudage, et, en sortie, au porteur de soudage.

## Claims

1. Automatic welding process in which welding parameters are processed that vary during an execution of welding, characterized in that it comprises a first stage consisting of establishing relationships between said welding parameters and storing these relationships consisting of establishing at least one data base on the basis of triplets of parameters, each triplet of parameters incorporating a measured parameter, a controllable parameter and a result parameter and a second stage consisting in executing the following operations:
a) taking of pictures of a welding scene in progress;
b) analysis of this picture-taking to measure the welding parameters affecting the relationships;
c) evaluation, from these measurements and from said relationships, of the correction values to be made to the welding parameters;
d) intervention, as a function of said correction values, on the welding in progress.

2. Process according to claim 1, characterized in that it comprises, between operations (a) and (b), a dialog operation with a user assuring a choice of automatic execution or of interactive execution of operations (b) to (d).

3. Process according to either of the claims 1 and 2, characterized in that the operations constituting the second stage are continually repeated as long as an interrupt order has not been received.

4. Process according to claim 3, characterized in that the interrupt order is given by the user during the interactive dialog operation.

5. Process according to any one of the claims 1 to 4, characterized in that picture-taking operation (a) is followed by an operation for storing of said picture-taking.

6. Process according to any one of the claims 1 to 5, characterized in that the relationships comprise relationships connecting a measured parameter with a result parameter.

7. Process according to any one of the claims 1 to 6, characterized in that the relationships comprise relationships connecting a result parameter with a controllable parameter.

8. Process according to claim 6 or 7, characterized in that the relationships comprise relationships connecting a result parameter with a controllable parameter, each result parameter being subject to an appropriate constant value by correction of the controllable parameter from the determination of the measured parameter.

9. Process according to any one of the claims 1 to 8, characterized in that the first step of establishing the relationships consists in establishing three data bases:
- a static data base comprising, for each of the measured parameters, values obtained for the controllable parameters and the result parameters under established conditions;
- a dynamic data base comprising values of the measured parameters and of the result parameters during temporary variations of the controllable parameters;
- a disturbed data base comprising values of the result parameters obtained for the measured parameters and the controllable parameters in the presence of a disturbance to be treated.

10. Process according to any one of the claims 1 to 9, characterized in that the relationships between parameters comprise a relationship describing a width of a welding bath.

11. Process according to any one of the claims 1 to 10, characterized in that the relationships between parameters comprise a relationship describing a contour of the welding bath.

12. Process according to any one of the claims 1 to 11, characterized in that it is performed in metal treatment operations using a welding bath.

13. Automatic welding system using the process according to any one of the claims 1 to 12, comprising:
- a welding head (32),
- a welding carrier (30) to which the welding head is fastened;
- means (36, 38) for supplying the head with electricity;
- a processing and control unit (PCU) (28) connected to the welding head and to the carrier, characterized in that:
- the welding head comprises means for taking pictures of the welding scene;
- the welding carrier is able to be moved relative to the welding scene; and
- the processing and control unit (PCU) comprises a central processing unit (48), means (44) for analyzing the pictures and means (46) for controlling the power supply means and the welding carrier.

14. Welding system according to claim 13, characterized in that the processing and control unit further comprises means (42) for displaying images and means (40) for storing said images, located upstream from the analysis means.

15. System according to claim 14, characterized in that the means for analyzing the images of the welding scene comprises an image acquisition card (44) installed in the central processing unit (CPU), this card being connected to the means for displaying images and to the means for storing images.

16. System according to any one of the claims 13 to 15, characterized in that the central processing unit comprises input/output interface cards (46) able to establish connections between the CPU and the welding carrier, between the CPU and the power supply means and between the CPU and the welding head.

17. System according to any one of the claims 13 to 16, characterized in that the electric power supply means comprises a welding generator generating a welding current that can be controlled from the outside by at least one electric signal.

18. System according to claim 17, characterized in that it further comprises means for regulating an arc voltage that is connected at input, to the welding head, and, at output, to the welding carrier.

## Patentansprüche

1. Automatisches Schweißverfahren, bei dem man im Laufe der Ausführung einer Schweißung variierende Schweißparameter verarbeitet bzw. behandelt,
**dadurch gekennzeichnet,** daß es umfaßt:
- einen ersten Schritt zum Herstellen und Abspeichern von Relationen zwischen diesen Parametern, darin bestehend, wenigstens eine Datenbasis zu erstellen aufgrund von Parameter-Dreiergruppen, wobei jede Parameter-Dreiergruppe einen gemessenen Parameter, einen steuerbaren Parameter und einen Resultat-Parameter umfaßt; und
- einen zweiten Schritt, darin bestehend, die folgenden Operationen durchzuführen:
a) Aufnahme einer laufenden Schweißszene;
b) Analyse dieser Aufnahme, um die die Relationen beeinflussenden Schweißparameter zu messen;
c) Berechnung aufgrund dieser Messungen und dieser Relationen von Werten von Korrekturen, die vorzunehmen sind an den Schweißparametern,
d) Eingriff in die laufende Schweißung in Abhängigkeit von besagten Korrekturwerten.

2. Verfahren nach Anspruch 1, dadurch gekennzeichnet, daß es zwischen den Operationen (a) und (b) einen Verfahrensschritt des Dialogs mit einem Benutzer umfaßt, der eine Wahl zwischen einer automatischen Ausführung und einer interaktiven Ausführung der Operationen (a) und (b) gewährleistet.

3. Verfahren nach einem der Ansprüche 1 und 2, dadurch gekennzeichnet, daß die den zweiten Schritt bildenden Operationen permanent wiederholt werden, solange kein Unterbrechungsbefehl empfangen wurde.

4. Verfahren nach Anspruch 3, dadurch gekennzeichnet, daß der Unterbrechungsbefehl durch den Benutzer gegeben wird, während der Operation des interaktiven Dialogs.

5. Verfahren nach einem der Ansprüche 1 bis 4, dadurch gekennzeichnet, daß auf die Aufnahmen-Operation (a) eine Einspeicherungsoperation dieser Aufnahmen folgt.

6. Verfahren nach einem der Ansprüche 1 bis 5, dadurch gekennzeichnet, daß die Relationen Relationen umfassen, die einen gemessenen Parameter mit einem Resultat-Parameter verbinden.

7. Verfahren nach einem der Ansprüche 1 bis 6, dadurch gekennzeichnet, daß die Relationen Relationen umfassen, die einen Resultat-Parameter mit einem steuerbaren Parameter verbinden.

8. Verfahren nach den Ansprüchen 6 und 7, dadurch gekennzeichnet, daß jeder Resultat-Parameter durch Korrektur des steuerbaren Parameters auf einen konstanten Eigenwert geregelt wird aufgrund der Bestimmung bzw. Ermittlung des gemessenen Parameters.

9. Verfahren nach einem der Ansprüche 1 bis 8, dadurch gekennzeichnet, daß der erste Schritt zum Herstellen der Relationen darin besteht, drei Datenbasen zu erstellen:
- eine Basis aus statischen Daten, für jeden der gemessenen Parameter Werte umfassend, erhalten für die steuerbaren Parameter und die Resultat-Parameter im Beharrungszustand;
- eine Basis aus dynamischen Daten, umfassend Werte von gemessenen Parametern und Resultat-Parameter bei temporären Veränderungen der steuerbaren Parameter;
- eine Basis aus gestörten Daten, umfassend Werte der Resultat-Parameter, erhalten für die gemessenen Parameter und die steuerbaren Parameter beim Auftreten einer zu verarbeitenden Störung.

10. Verfahren nach einem der Ansprüche 1 bis 9, dadurch gekennzeichnet, daß die Relationen zwischen Parametern eine eine Breite eines Schweißbads beschreibende Relation enthalten.

11. Verfahren nach einem der Ansprüche 1 bis 10, dadurch gekennzeichnet, daß die Relationen zwischen Parametern eine ein Schweißbadrelief beschreibende Relation umfassen.

12. Verfahren nach einem der Ansprüche 1 bis 11, dadurch gekennzeichnet, daß es angewendet wird bei Metallbearbeitungsoperationen mit Bildung eines Schweißbads.

13. Automatisiertes schweißsystem mit Anwendung des Verfahrens nach einem der Ansprüche 1 bis 12, umfassend:
- einen Schweißkopf (32);
- einen Schweißträger (30), an dem der Schweißkopf befestigt ist;
- Stromversorgungseinrichtungen (36, 38) des Kopfes;
- eine Steuer- und Verarbeitungseinheit (28), verbunden mit dem Schweißkopf und dem Träger,
**dadurch gekennzeichnet:**
- daß der Schweißkopf Einrichtungen für Aufnahmen von der Schweißszene umfaßt;
- daß der Schweißträger sich in bezug auf die Schweißszene bewegen kann; und
- die Steuer- und Verarbeitungseinheit (28) eine Zentraleinheit (48), Bildaufnahmen-Analyseeinrichtungen (44) und Einrichtungen (46) umfaßt, um die Versorgungseinrichtungen und den Schweißträger zu steuern.

14. System nach Anspruch 13, dadurch gekennzeichnet, daß die Steuer- und Verarbeitungseinheit außerdem Einrichtungen (42) zur Sichtbarmachung der Bildaufnahmen und Einrichtungen (40) zum Abspeichern dieser Bilder umfaßt, den Analyseeinrichtungen vorgeschaltet.

15. System nach Anspruch 14, dadurch gekennzeichnet, daß die Analyseeinrichtungen der Bilder der Schweißszene eine in der Zentraleinheit installierte Bilder-Erfassungskarte (44) enthalten, wobei diese Karte verbunden ist mit den Einrichtungen zur Sichtbarmachung der Bilder und den Einrichtungen zum Abspeichern der Bilder.

16. System nach einem der Ansprüche 13 bis 15, dadurch gekennzeichnet, daß die Zentraleinheit Eingänge-/Ausgänge-Interface-Karten enthält, die Verbindungen herstellen können zwischen der Zentraleinheit und dem Schweißträger, zwischen der Zentraleinheit und den Versorgungseinrichtungen und zwischen der Zentraleinheit und dem Schweißkopf.

17. System nach einem der Ansprüche 13 bis 16, dadurch gekennzeichnet, daß die Stromversorgungseinrichtungen einen Schweißgenerator umfassen, einen Schweißstrom erzeugend, von außen durch wenigstens ein elektrisches Signal steuerbar.

18. System nach Anspruch 17, dadurch gekennzeichnet, daß es außerdem Regeleinrichtungen einer Lichtbogenspannung umfaßt, die als Eingang mit dem Schweißkopf verbunden sind und als Ausgang mit dem Schweißträger.
